# EUROPÄISCHE PATENTANMELDUNG

(11) **EP 2 039 962 A2**
(43) Veröffentlichungstag der Anmeldung: **25.03.2009**
(21) Anmeldenummer: 08016623.4
(22) Anmeldetag: 22.09.2008
(51) Int. Cl.: F16H 25/20

(54) **Linearverstellvorrichtung**

(30) Priorität: 24.09.2007 DE 202007013428 U; 17.07.2008 EP 08012886
(71) Anmelder: Dzubiel, Gerhard, 88045 Friedrichshafen (DE); Hostettler, Franz, 1071 Chexbres (CH); Martinez, Antonio, 72762 Reutlingen (DE)
(72) Erfinder: Dzubiel, Gerhard, 88045 Friedrichshafen (DE); Hostettler, Franz, 1071 Chexbres (CH); Martinez, Antonio, 72762 Reutlingen (DE)
(74) Vertreter: Daub, Thomas

(57) **Zusammenfassung**

Linearverstellvorrichtung mit einer Verstelleinheit (10a; 10b), die eine Gewindespindel (11a; 11b) und eine mit der Gewindespindel (11a; 11b) in Eingriff stehende Gewindemutter (12a; 12b) aufweist, und mit einer Motoreinheit (13a; 13b), die dazu vorgesehen ist, zumindest einen Teil der Verstelleinheit (10a; 10b) anzutreiben.

Es wird vorgeschlagen, dass die Linearverstellvorrichtung eine Motorsteuereinheit (14a; 14b) aufweist, die für eine Steuerung und/oder Regelung der Motoreinheit (13a; 13b) vorgesehen ist.

## Beschreibung

### Stand der Technik

Die Erfindung geht aus von einer Linearverstellvorrichtung nach dem Oberbegriff des Anspruchs 1.

Es sind bereits Linearverstellvorrichtungen mit einer Verstelleinheit, die eine Gewindespindel und eine mit der Gewindespindel in Eingriff stehende Gewindemutter aufweist, und mit einer Motoreinheit, die dazu vorgesehen ist, zumindest einen Teil der Verstelleinheit anzutreiben, bekannt.

Der Erfindung liegt die Aufgabe zugrunde, eine Verstellvorrichtung bereitzustellen, die eine hohe Flexibilität aufweist. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Linearverstellvorrichtung mit einer Verstelleinheit, die eine Gewindespindel und eine mit der Gewindespindel in Eingriff stehende Gewindemutter aufweist, und mit einer Motoreinheit, die dazu vorgesehen ist, zumindest einen Teil der Verstelleinheit anzutreiben.

Es wird vorgeschlagen, dass die Linearverstellvorrichtung eine Motorsteuereinheit aufweist, die für eine Steuerung und/oder Regelung der Motoreinheit vorgesehen ist. Durch eine Motorsteuereinheit kann die Motoreinheit einfach angesteuert und bedient werden, wodurch eine Flexibilität erhöht wird, da ein externes Steuerteil entfällt. Unter einer "Motorsteuereinheit" soll dabei insbesondere eine Steuer- und/oder Regeleinheit verstanden werden, die dazu vorgesehen ist, eine Drehzahl und/oder eine Drehrichtung der Motoreinheit einzustellen. Insbesondere soll unter einer "Motorsteuereinheit" eine elektronische Recheneinheit mit einer Speichereinheit und einem in der Speichereinheit gespeicherten Betriebsprogramm verstanden werden, die dazu vorgesehen ist, Betriebsparameter der Motoreinheit einzustellen.

Weiter wird vorgeschlagen, dass die Motorsteuereinheit eine Kommunikationseinheit aufweist. Dadurch kann die Motoreinheit einfach von einer externen Steuereinheit und/oder einem externen Steuerprogramm angesteuert werden. Unter einer "Kommunikationseinheit" soll dabei insbesondere eine Einheit verstanden werden, die dazu vorgesehen ist, mit einer entfernten Einstelleinheit zu kommunizieren. Die Kommunikationseinheit soll dabei insbesondere dazu vorgesehen sein, zumindest einen Einstellparameter zu empfangen, wie beispielsweise eine Verstellrichtung, eine Verstellgeschwindigkeit und/oder eine Einstellposition. Die Motorsteuereinheit soll dann dazu vorgesehen sein, die Motoreinheit in Abhängigkeit von den Parametern anzusteuern.

Vorteilhafterweise weist die Kommunikationseinheit zumindest eine genormte Schnittstelle auf, wobei unter einer "genormten Schnittstelle" insbesondere eine nach einem nationalen oder internationalen Standard genormte Schnittstelle verstanden werden soll, wie beispielsweise eine nach DIN, EN und/oder IEC genormte Schnittstelle. Vorteilhafterweise weist das Bus-interface ein Profibus-Interface, ein CAN-Bus-Interface und/oder besonders vorteilhaft ein RS485-Interface auf. Durch eine genormte Schnittstelle kann eine besonders hohe Kompatibilität erreicht werden.

Weiter wird vorgeschlagen, dass die Motorsteuereinheit eine Sensoreinheit aufweist, die dazu vorgesehen ist, eine Motordrehbewegung zu überwachen. Dadurch können Abweichungen eines Ist-Zustands von einem erwarteten Sollzustand, wie sie beispielsweise durch Fehlfunktionen entstehen können, einfach erkannt werden. Vorzugsweise ist die Sensoreinheit mit der Motorsteuereinheit verbunden, wodurch die Motorsteuereinheit den Sollzustand auf den Ist-Zustand korrigieren kann.

Insbesondere ist es dabei vorteilhaft, wenn die Sensoreinheit für einen Positioniervorgang vorgesehen ist. Dadurch kann bei einem fehlerhaften Positioniervorgang eine Reaktion erfolgen, wodurch ein Bediener auf den fehlerhaften Positioniervorgang aufmerksam gemacht werden kann.

Weiter wird vorgeschlagen, dass die Sensoreinheit für eine Referenzpunkteinstellung vorgesehen ist. Dadurch kann auf eine separate Sensoreinheit zur Einstellung des Referenzpunktes verzichtet werden, wodurch eine besonders kompakte und kostengünstige Linearverstellvorrichtung bereitgestellt werden kann. Unter einem "Referenzpunkt" soll dabei insbesondere eine definierte Grundeinstellung verstanden werden, auf die die Linearverstellvorrichtung eingestellt werden kann, wie beispielsweise ein Null-Punkt.

In einer weiteren Ausgestaltung wird vorgeschlagen, dass die Linearverstellvorrichtung ein Netzteil aufweist, das für eine Versorgung der Motoreinheit und/oder der Motorsteuereinheit vorgesehen ist. Dadurch kann eine besonders kompakte Ausgestaltung der Linearverstellvorrichtung erreicht werden. Vorzugsweise ist das Netzteil zumindest für eine Spannungsanpassung zur Versorgung der Motorsteuereinheit vorgesehen. Grundsätzlich kann das Netzteil aber auch für eine Spannungsanpassung zur Versorgung der Motoreinheit und der Motorsteuereinheit vorgesehen sein.

Ferner wird vorgeschlagen, dass die Motoreinheit einen als Schrittmotor ausgeführten Elektromotor aufweist. Dadurch kann mittels der Motoreinheit eine definierte Position angefahren werden. Grundsätzlich können aber auch andere Ausführungen von Elektromotoren verwendet werden.

Weiter wird vorgeschlagen, dass die Linearverstellvorrichtung eine Führungseinheit aufweist, die dazu vorgesehen ist, die Gewindespindel oder die Gewindemutter drehsicher anzuordnen.

Dadurch kann eine besonders einfache Linearverstellvorrichtung realisiert werden.

Vorteilhafterweise weist die Führungseinheit zumindest eine Führungsschiene auf. Dadurch kann eine besonders vorteilhafte Führungseinheit realisiert werden. Vorzugsweise weist die Führungseinheit zumindest zwei Führungsschienen auf, die dazu vorgesehen sind, ein Verstellelement drehsicher anzuordnen, wodurch eine besonders vorteilhafte Anordnung der Gewindemutter bzw. der Gewindespindel gefunden werden kann.

Eine erfindungsgemäße Vorrichtung ist insbesondere für eine Hubvorrichtung, beispielsweise zum Anheben von Werkstücken, vorteilhaft, da durch eine erfindungsgemäße Ausgestaltung eine besonders kostengünstige und kompakte Hubvorrichtung bereitgestellt werden kann. Dabei können mittels einer erfindungsgemäßen Linearverstellvorrichtung sowohl Kurzhubvorrichtungen mit einer Hubhöhe von maximal ca. 50mm als auch Langhubvorrichtungen mit einer Hubhöhe von mehr als 100mm bereitgestellt werden. Eine Ausgestaltung als Langhubvorrichtung bzw. als Kurzhubvorrichtung erfolgt vorteilhafterweise durch eine Ausgestaltung der Führungseinheit.

Weitere Vorteile ergeben sich aus der folgenden Zeichnungsbeschreibung. In den Zeichnungen sind zwei Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematisiert eine Linearverstellvorrichtung mit einer drehsicher angeordneten Gewindespindel,
- Fig. 2: schematisiert eine Linearverstellvorrichtung mit einer drehsicher angeordneten Gewindemutter und
- Fig. 3: eine Führungseinheit der Linearverstellvorrichtung aus Fig. 2.

### Beschreibung der Ausführungsbeispiele

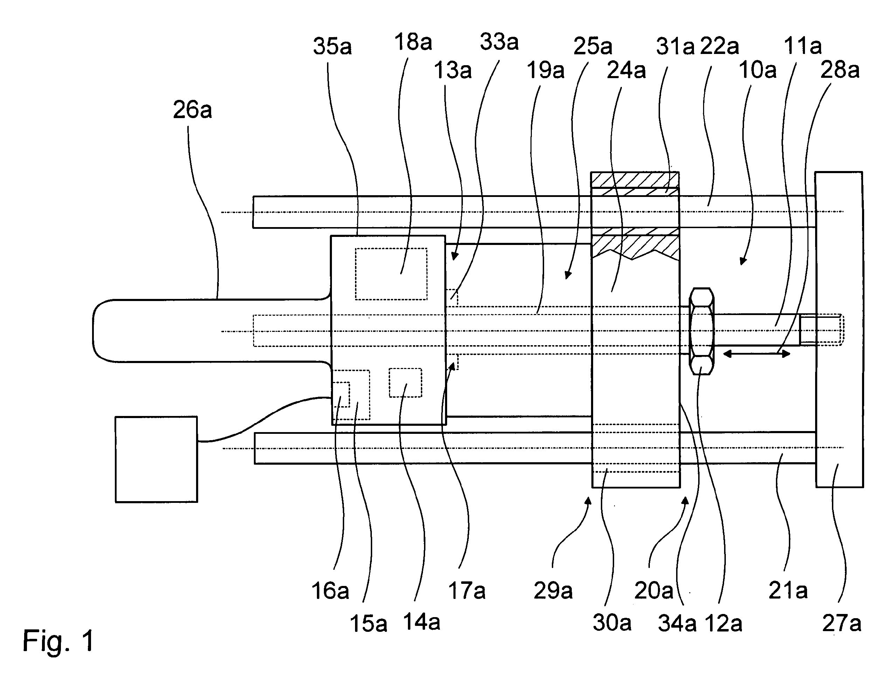

Figur 1 zeigt eine Linearverstellvorrichtung mit einer Verstelleinheit 10a, die eine Gewindespindel 11a und eine Gewindemutter 12a aufweist. Die Gewindespindel 11a greift in die Gewindemutter 12a ein. Zum Antrieb der Verstelleinheit 10a weist die Linearverstellvorrichtung eine Motoreinheit 13a auf. Die Motoreinheit 13a ist fest mit einem Grundträger 24a der Linearverstellvorrichtung verbunden. Mittels der Linearverstellvorrichtung ist eine Führungsvorrichtung bereitgestellt.

Die Motoreinheit 13a weist einen Elektromotor 25a auf, der als ein Schrittmotor ausgebildet ist. Eine Motorwelle 19a der Motoreinheit 13a ist drehfest mit der Gewindemutter 12a verbunden. Die Gewindemutter 12a ist dadurch axial fest angeordnet und kann mittels der Motoreinheit 13a drehend angetrieben werden. Die Motorwelle 19a ist als eine Hohlwelle ausgeführt und durchsetzt die Motoreinheit 13a. Die Gewindespindel 11a ist zumindest in einem eingefahrenen Betriebszustand in der als Hohlwelle ausgebildeten Motorwelle 19a angeordnet. In eingefahrenem Zustand durchsetzt die Gewindespindel 11a die Motorwelle 19a und damit die Motoreinheit 13a.

An der Motoreinheit 13a ist auf einer der Gewindemutter 12a abgewandten Seite eine Abdeckvorrichtung 26a angebracht, die einen Teil der Gewindespindel 11a abdeckt, der im eingefahrenen Zustand über die Motoreinheit 13a übersteht. Die Abdeckvorrichtung 26a umschließt das über die Motoreinheit 13a überstehenden Teil vollständig.

Zur Führung der Gewindespindel 11a weist die Linearverstellvorrichtung eine Führungseinheit 20a auf, mittels der die Gewindespindel 11a drehsicher angeordnet ist. Die Führungseinheit 20a führt ein axial verschiebbares Verstellelement 27a. Die Gewindespindel 11a ist drehfest und axial fest mit einem Verstellelement 27a verbunden. Die Führungseinheit 20a führt das Verstellelement 27a parallel zu einer Haupterstreckungsrichtung 28a der Gewindespindel 11a. Eine Drehbewegung des Verstellelements 27a relativ zu dem Grundträger 24a wird mittels der Führungseinheit 20a verhindert, wodurch auch die Gewindespindel 11a drehfest angeordnet ist. Durch eine Drehbewegung der Gewindemutter 12a wird die Gewindespindel 11a, die in die Gewindemutter 12a eingereift, entlang der Haupterstreckungsrichtung 28a der Gewindespindel 12a relativ zum Grundträger 24a und zur Motoreinheit 13a verschoben. Eine Verstelllänge ist dabei im Wesentlichen durch eine Steifigkeit der Führungseinheit 20a bedingt.

Die Führungseinheit 20a weist zwei Führungsschienen 21a, 22a auf, die fest mit dem Verstellelement 27a verbunden sind. Die Führungsschienen 21a ,22a sind in dem Grundträger 24a der Linearverstellvorrichtung entlang der Haupterstreckungsrichtung 28a verschiebbar gelagert. Eine Lagereinheit 29a zur Lagerung der Führungsschienen 21a, 22a ist mittels Gleitlagern 30a, 31a realisiert. Alternativ sind auch andere Axiallagerungen der Führungsschienen 21a, 22a denkbar, wie beispielsweise eine Lagerung mit Kugelbüchsen.

Weiter umfasst die Motoreinheit 13a ein Netzteil 18a, über die die Motoreinheit 13a, insbesondere der Elektromotor 25a der Motoreinheit 13a, und eine Motorsteuereinheit 14a mit Strom versorgt werden. Das Netzteil 18a ist für verschiedene Versorgungsspannungen vorgesehen. Mittels des Netzteils 18a erfolgt eine Spannungsanpassung der Versorgungsspannung auf eine Betriebsspannung für die Motorsteuereinheit 14a. Die Versorgungsspannung wird dabei auf eine Betriebsspannung von 3V-5V angepasst, wobei mittels des Netzteils 18a grundsätzlich auch eine Spannungsanpassung auf eine Betriebsspannung von 1,5V für die Motorsteuereinheit 14a erfolgen kann. Das Netzteil kann gleichzeitig mit zwei unterschiedlichen Versorgungsspannungen versorgt werden, wobei die eine Versorgungsspannung, die vorzugsweise 24V beträgt, für die Motorsteuereinheit 14a vorgesehen ist, während die andere Versorgungsspannung, die beispielsweise 24V, 48V oder 60V betragen kann, für die Motoreinheit 13a vorgesehen ist. Grundsätzlich kann das Netzteil aber auch für nur eine Versorgungsspannung, wie beispielsweise 220V vorgesehen sein, die auf eine Betriebsspannung für die Motoreinheit 13a und eine Betriebsspannung für die Motorsteuereinheit 14a angepasst wird.

Zur Steuerung und Regelung des Elektromotors 25a der Motoreinheit 13a weist die Linearverstellvorrichtung die Motorsteuereinheit 14a auf, mittels der die Drehbewegung des als Schrittmotor ausgeführten Elektromotors 25a eingestellt wird. Die Motorsteuereinheit 14a weist eine Kommunikationseinheit 15a auf, mittels der die Motorsteuereinheit 14a zur Einstellung der Drehbewegung des Elektromotors 25a von einer externen Steuereinheit angesteuert werden kann. Die Kommunikationseinheit 15a umfasst eine genormte Schnittstelle 16a, die als eine RS485-Schnittestelle ausgeführt ist. Mittels der Kommunikationseinheit 15a können verschiedene Einstellparameter empfangen werden. Alternativ oder zusätzlich kann die Kommunikationseinheit 15a auch noch weitere Schnittstellen aufweisen, wie beispielsweise eine Profibus-Schnittstelle oder eine CAN-Bus-Schnittstelle.

Zur Überwachung der Drehbewegung des Elektromotors 25a weist die Motorsteuereinheit 14a eine Sensoreinheit 17a auf, mittels der die Drehbewegung der Motorwelle 19a und damit eine Drehbewegung der Gewindemutter 12a überwacht werden. Die Sensoreinheit 17a weist ein Sensormittel 33a auf, das die Drehbewegung der Motorwelle 19a detektiert. Eine Genauigkeit des Sensormittels 33a entspricht der kleinsten Drehbewegung, die mittels des als Schrittmotor ausgebildeten Elektromotors 25a durchgeführt werden kann.

Zur Überwachung eines Positioniervorgangs ist die Sensoreinheit 17a mit der Motorsteuereinheit 14a verbunden. Grundsätzlich ist der Positioniervorgang durch eine Ansteuerung des Elektromotors 25a definiert, da mittels der Ansteuerung des Elektromotors 25a die Drehlage der Motorwelle 19a definiert eingestellt und verstellt werden kann. Bei einem fehlerhaften Positioniervorgang, beispielsweise durch eine blockierte Verstelleinheit 10a, weicht jedoch die durch die Ansteuerung des Elektromotors 25a vorgegebene Drehbewegung von der tatsächlichen Drehbewegung ab.

Zur Überwachung des Positioniervorgangs vergleicht die Motorsteuereinheit 14a die tatsächliche Drehbewegung des Elektromotors 25a mit der vorgegebenen Drehbewegung. Wird zwischen den Drehbewegungen eine Abweichung erkannt, wird diese für die Durchführung des Positioniervorgangs berücksichtigt. Beispielsweise wird bei einer erkannten Abweichung eine Fehlermeldung ausgegeben oder es kann versucht werden, den Positioniervorgang erneut durchzuführen. Weiter wird die Sensoreinheit 17a für eine Referenzpunkteinstellung verwendet. Der Referenzpunkt ist als ein Nullpunkt ausgebildet. An dem Referenzpunkt ist die Linearverstellvorrichtung vollständig eingefahren.

Zur Einstellung des Referenzpunktes wird die Linearverstellvorrichtung mittels der Verstelleinheit 10a eingefahren, bis das Verstellelement 27a bzw. ein mit dem Verstellelement 27a verbundenes Bauteil gegen einen fest mit dem Grundträger 24a verbundenen Anschlag 34a läuft. Da dadurch eine weitere axiale Verstellung des Verstellelements 27a verhindert wird, wird die Ist-Drehbewegung der Motorwelle 19a zunächst gehemmt und schließlich verhindert, auch wenn die Motorsteuereinheit 14a weiter eine Drehbewegung zum Einfahren der Linearverstellvorrichtung vorgibt.

Bei einer durch den Anschlag 34a verhinderten Drehbewegung nimmt der Elektromotor 25a eine Drehlage ein, die ausgehend von einer Drehlage für den Referenzpunkt um weniger als eine Umdrehung weitergedreht ist. Zur Einstellung des Referenzpunktes wird der Elektromotor 25a, ausgehend von der Drehlage beim Stillstand der Drehbewegung, auf eine Drehlage zurückgedreht, die der Drehlage des Referenzpunktes entspricht. Da der Elektromotor 25a maximal um eine Umdrehung weitergedreht ist, wird die Linearverstellvorrichtung dadurch auf den Referenzdrehpunkt eingestellt. Der Elektromotor 25a, die Motorsteuereinheit 14a, das Netzteil 18a, die Kommunikationseinheit 15a und die Sensoreinheit 17a sind in einem gemeinsamen Gehäuse 35a angeordnet, das mehrere fest miteinander verbundene Gehäuseteile umfassen kann. Es ist jedoch auch denkbar, die Einheiten nur teilweise in dem gemeinsamen Gehäuse 35a anzuordnen und beispielsweise die Kommunikationseinheit 15a mit einem eigenen separaten Gehäuse auszuführen.

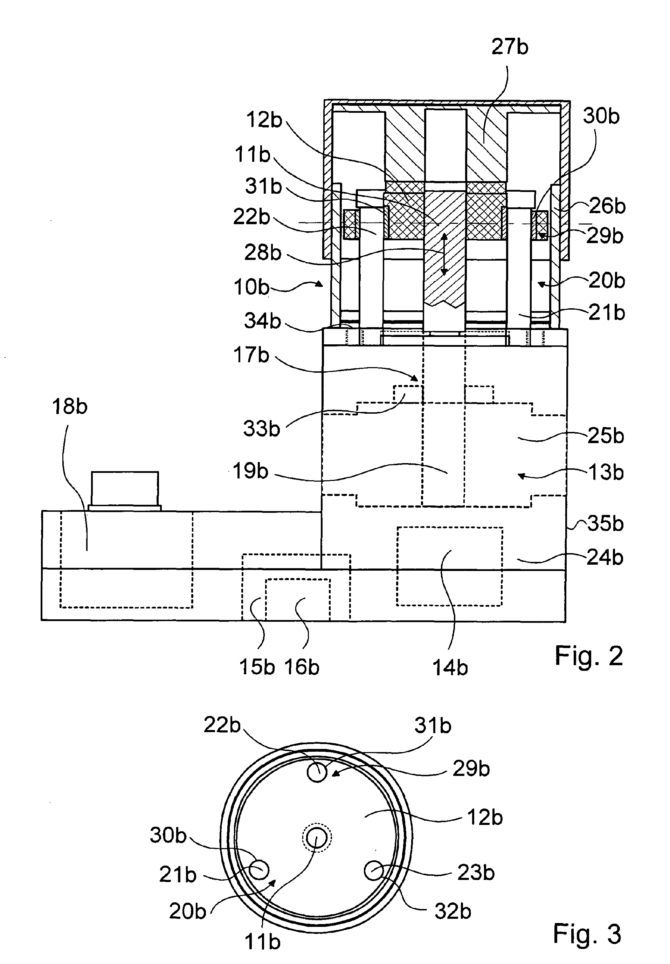

In den Figuren 2 und 3 ist ein weiteres Ausführungsbeispiel der Erfindung gezeigt. Zur Unterscheidung der Ausführungsbeispiele ist der Buchstabe a in den Bezugszeichen des Ausführungsbeispiels in der Figur 1 durch den Buchstaben b in den Bezugszeichen des Ausführungsbeispiels in den Figuren 2 und 3 ersetzt. Die nachfolgende Beschreibung beschränkt sich im Wesentlichen auf die Unterschiede zu dem Ausführungsbeispiel in der Figur 1, wobei bezüglich gleich bleibender Bauteile, Merkmale und Funktionen auf die Beschreibung des Ausführungsbeispiels in der Figur 1 verwiesen werden kann.

Figur 2 zeigt eine alternative Ausgestaltung einer Linearverstellvorrichtung, mittels der eine Kurzhubvorrichtung bereitgestellt ist. Eine Verstelllänge der Linearverstellvorrichtung beträgt maximal ca. 50mm. Die Linearverstellvorrichtung weist eine Verstelleinheit 10b mit einer Gewindespindel 11b und einer Gewindemutter 12b sowie eine Motoreinheit 13b mit einem als Schrittmotor ausgebildeten Elektromotor 25b auf.

Die Gewindespindel 11b ist mit einer Motorwelle 19b der Motoreinheit 13b verbunden. Mittels der Motoreinheit 13b ist die Gewindespindel 11b axial fest mit einem Grundträger 24b verbunden. Die Gewindespindel ist somit axial fest und drehbar angeordnet. Die Gewindemutter 12b ist mit einem Verstellelement 27b der Linearverstellvorrichtung verbunden und drehsicher angeordnet. Die Gewindemutter 12b ist somit drehfest und axial verschiebbar angeordnet.

Der Grundträger 24b der Linearverstellvorrichtung, eine Motorsteuereinheit 14b und die Motoreinheit 13b sind fest miteinander verbunden. Zur Führung des Verstellelements 27b weist die Linearverstellvorrichtung eine Führungseinheit 20b mit drei Führungsschienen 21b, 22b, 23b auf. Die Führungsschienen 21b, 22b, 23b sind ebenfalls fest mit dem Grundträger 24b verbunden. Die Führungsschienen 21b, 22b, 23b sind äquidistant zu der Gewindespindel 11b angeordnet und in Umfangsrichtung gleichmäßig verteilt.

Das Verstellelement 27b, dessen Position mittels der Verstelleinheit 10b verstellt werden kann, weist eine Lagereinheit 29b mit drei Gleitlager 30b, 31b, 32b auf, mittels denen das Verstellelement 27b axial verschiebbar auf den Führungsschienen 21b, 22b, 23b gelagert ist. Mittels der Führungseinheit 20b ist das Verstellelement 27b drehfest zu dem Grundträger 24b angeordnet (vergleiche Figur 3). Die Gewindemutter 12b ist drehfest und axial fest mit dem Verstellelement 27b verbunden.

Die fest mit dem Grundträger 24b verbundenen Führungsschienen 21b, 22b, 23b weisen eine axiale Länge auf, die in etwa gleich groß ist wie eine Verstelllänge der Linearverstellvorrichtung. Zur Aufnahme der Führungsschienen 21b, 22b, 23b weist das Verstellelement 27b Ausnehmungen auf, in die die Führungsschienen 21b, 22b, 23b in eingefahrenem Zustand eingreifen. Außerdem weist das Verstellelement 27b eine Ausnehmung auf, in die in eingefahrenem Zustand die Gewindespindel 11b eingreift. Außerdem weist die Linearverstellvorrichtung eine Abdeckvorrichtung 26b auf, mittels der ein die Führungsschienen 21b, 22b, 23b und die Gewindespindel 11b in einem Bereich zwischen dem Verstellelement 27b und der Motoreinheit 13b abgedeckt sind. Die Abdeckvorrichtung 26b ist fest mit dem Grundträger 24b verbunden.

Weiter weist die Linearverstellvorrichtung die Motorsteuereinheit 14b auf, mittels der der Elektromotor 25b der Motoreinheit 13b gesteuert bzw. geregelt wird. Die Motorsteuereinheit 14b ist analog zu dem Ausführungsbeispiel in Figur 1 ausgestaltet.

Die Motorsteuereinheit 14b weist eine Kommunikationseinheit 15b mit einer genormten Schnittstelle 16b und eine Sensoreinheit 17b zur Überwachung einer Motordrehbewegung auf. Mittels der Sensoreinheit 17b wird ein Positioniervorgang überwacht und ein Referenzpunkt eingestellt. Der Referenzpunkt wird mittels eines Anschlags 34b eingestellt.

### Bezugszeichen

- 10: Verstelleinheit
- 11: Gewindespindel
- 12: Gewindemutter
- 13: Motoreinheit
- 14: Motorsteuereinheit
- 15: Kommunikationseinheit
- 16: Schnittstelle
- 17: Sensoreinheit
- 18: Netzteil
- 19: Motorwelle
- 20: Führungseinheit
- 21: Führungsschiene
- 22: Führungsschiene
- 23: Führungsschiene
- 24: Grundträger
- 25: Elektromotor
- 26: Abdeckvorrichtung
- 27: Verstellelement
- 28: Haupterstreckungsrichtung
- 29: Lagereinheit
- 30: Gleitlager
- 31: Gleitlager
- 32: Gleitlager
- 33: Sensormittel
- 34: Anschlag
- 35: Gehäuse

## Patentansprüche

1. Linearverstellvorrichtung mit einer Verstelleinheit (10a; 10b), die eine Gewindespindel (11a; 11b) und eine mit der Gewindespindel (11a 11b) in Eingriff stehende Gewindemutter (12a; 12b) aufweist, und mit einer Motoreinheit (13a; 13b), die dazu vorgesehen ist, zumindest einen Teil der Verstelleinheit (10a; 10b) anzutreiben,
**gekennzeichnet durch**
eine Motorsteuereinheit (14a; 14b), die für eine Steuerung und/oder Regelung der Motoreinheit (13a; 13b) vorgesehen ist.

2. Linearverstellung nach Anspruch 1,
**dadurch gekennzeichnet, dass**
die Motorsteuereinheit (14a; 14b) eine Kommunikationseinheit (15a; 15b) aufweist.

3. Linearverstellung nach Anspruch 2,
**dadurch gekennzeichnet, dass**
die Kommunikationseinheit (15a; 15b) zumindest eine genormte Schnittstelle (16a; 16b) aufweist.

4. Linearverstellvorrichtung nach einem der vorhergehenden Ansprüche,
**dadurch gekennzeichnet, dass**
die Motorsteuereinheit (14a; 14b) eine Sensoreinheit (17a; 17b) aufweist, die dazu vorgesehen ist, eine Motordrehbewegung zu überwachen.

5. Linearverstellvorrichtung nach Anspruch 4,
**dadurch gekennzeichnet, dass**
die Sensoreinheit (17a; 17b) für einen Positioniervorgang vorgesehen ist.

6. Linearverstellvorrichtung nach Anspruch 4 oder 5,
**dadurch gekennzeichnet, dass**
die Sensoreinheit (17a; 17b) für eine Referenzpunkteinstellung vorgesehen ist.

7. Linearverstellvorrichtung nach einem der vorhergehenden Ansprüche,
**gekennzeichnet durch**
ein Netzteil (18a; 18b), das für eine Versorgung der Motoreinheit (13a; 13b) und/oder der Motorsteuereinheit (14a; 14b) vorgesehen ist.

8. Linearverstellvorrichtung nach einem der vorhergehenden Ansprüche,
**dadurch gekennzeichnet, dass**
die Motoreinheit (13a; 13b) einen als Schrittmotor ausgeführten Elektromotor (25a; 25b) aufweist.

9. Linearverstellvorrichtung nach einem der vorhergehenden Ansprüche,
**gekennzeichnet durch**
eine Führungseinheit (20a; 20b), die dazu vorgesehen ist, die Gewindespindel (11a; 11b) oder die Gewindemutter (12a; 12b) drehsicher anzuordnen.

10. Linearverstellvorrichtung nach Anspruch 9,
**dadurch gekennzeichnet, dass**
die Führungseinheit (20a; 20b) zumindest eine Führungsschiene (21a, 22a; 21b, 22b, 23b) aufweist.

11. Hubvorrichtung mit einer Linearverstellvorrichtung nach einem der vorhergehenden Ansprüche.
